# EUROPEAN PATENT APPLICATION

(11) **EP 3 438 867 A1**
(43) Date of publication of application: **06.02.2019**
(21) Application number: 18184507.4
(22) Date of filing: 19.07.2018
(51) Int. Cl.: G06F 21/55, H04L 29/06, G06F 17/30

(54) **NETWORK DEVICE AND METHOD FOR DETERMINING SECURITY PROBLEMS IN SUCH A NETWORK DEVICE**

(30) Priority: 02.08.2017 EP 17306032
(71) Applicant: THOMSON LICENSING, 92130 Issy les Moulineaux (FR)
(72) Inventor: VIGOUROUX, Jean-Ronan, 35576 Cesson-Sévigné (FR); LAMBERT, Anne, 35576 Cesson Sévigné (FR); PONDAVEN, Ghislaine, 35576 Cesson Sévigné (FR); LE MERRER, Erwan, 35576 Cesson Sévigné (FR)
(74) Representative: Ståhl, Björn Niclas

(57) **Abstract**

To determine if a device (110) is open to the Internet (140), the device (110), storing a statistically unique identifier for the device or a group of devices including the device, sends (S210) a search request comprising the statistically unique identifier to an Internet search engine (150), receives (S220) a response to the search request from the Internet search engine (150), determines (S230) from the search response whether the statistically unique identifier was found by the Internet search engine (150), and in case the statistically unique identifier was found found by the Internet search engine (150), performs (S240) an action intended to disable access to the statistically unique identifier from the Internet (140) via the communication interface (113). The device (110) can also update (S250) statistically unique identifier in case the statistically unique identifier was found in the search response.

## Description

### TECHNICAL FIELD

The present disclosure relates generally to network security and in particular to security of network devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A gateway (GW) connects a local, internal, network and an external network, typically the Internet. Typically, a GW can be administered through an administrative HyperText Markup Language (HTML) page, run locally by the GW using a HyperText Transfer Protocol (HTTP) server (e.g. Apache or NGINX). Via this HTML page, a user can configure GW functionalities. To access the administrative HTML page, the user typically connects from the local network to predetermined ports in the GW, conventionally ports 80, 8080, 443 and 8443.

The GW can usually also be administered remotely, i.e. from a remote computer in the external network. A main use of this possibility is remote troubleshooting of the GW by an Internet Service Provider's (ISP) helpdesk. Usually, this requires the GW to open its firewall on at least some ports, i.e. enabling access, thus leaving the GW exposed to the Internet. Once the troubleshooting is over, the GW firewall is closed again, ending the exposure to the Internet. Some recent gateways include a timer whose timeout normally causes the closing of the open port.

However, it can happen that GWs are misconfigured or that the GW firewall is not properly closed, leaving such GWs exposed to the Internet after troubleshooting, possibly long enough for web search engines (e.g. Bing, Google and Yahoo!) to index these GWs. A possible countermeasure is to put indications such as "Disallow: /" in a robot.txt file stored by the GWs, which at least in theory should stop web crawlers from indexing the GW, but this is not always the case since not all web crawlers respect such indications.

In addition, sites such Shodan (www.shodan.io) provide information, previously gathered through web crawling, about devices, including GWs, connected to the Internet. Device owners and hackers alike can use the site to detect vulnerabilities in indexed devices. This can result in a security risk for owners and users of indexed GWs.

One solution to this problem is simply to close the GWs found on such a site remotely. However, these sites are not necessarily quick in updating their information, which means that a GW could be open for quite some time before the site is updated. Hence, monitoring such sites would not be very timely or reactive, and it would further require a possibly large infrastructure to monitor such sites or to crawl the Internet in search of GWs open to the Internet. Another problem is that such sites typically only list devices with an IP address and that they thus may not list devices in a LAN (that do not have an IP address of their own) and that they are unsuitable for finding e.g. nomad devices that change IP address.

It will thus be appreciated that there is a desire for a solution that addresses at least some of the shortcomings of the conventional devices. The present principles provide such a solution.

### SUMMARY OF DISCLOSURE

In a first aspect, the present principles are directed to a device comprising a communication interface configured for connection to a network, memory configured to store an identifier for the device or a group of devices including the device, and at least one processor configured to enable controlled access to the identifier from the network via the communication interface, send a search request for at least part of the identifier to a search engine, receive a search response from the search engine, determine from the search response whether the identifier was found by the search engine, and in case the identifier was found by the search engine, perform an action intended to result in disabling uncontrolled access to the identifier from the network via the communication interface.

In a second aspect, the present principles are directed to a method for determining if a device is open to a network. In the device, storing an identifier for the device or a group of devices including the device, at least one processor sends a search request comprising the identifier to a search engine, receives a response to the search request from the search engine, determines from the search response whether the identifier was found by the search engine, and in case the identifier was found by the search engine, performs an action intended to disable uncontrolled access to the identifier from the network via the communication interface.

In a third aspect, the present principles are directed to a computer program comprising program code instructions executable by a processor for implementing a method according to any embodiment of the second aspect.

In a fourth aspect, the present principles are directed to a computer program product which is stored on a non-transitory computer readable medium and comprises program code instructions executable by a processor for implementing a method according to any embodiment of the second aspect.

### BRIEF DESCRIPTION OF DRAWINGS

Features of the present principles will now be described, by way of non-limiting example, with reference to the accompanying drawings, in which:
Figure 1 illustrates an exemplary system implementing the present principles; and
Figure 2 illustrates a method for determining if a gateway is vulnerable according to an embodiment of the present principles.

### DESCRIPTION OF EMBODIMENTS

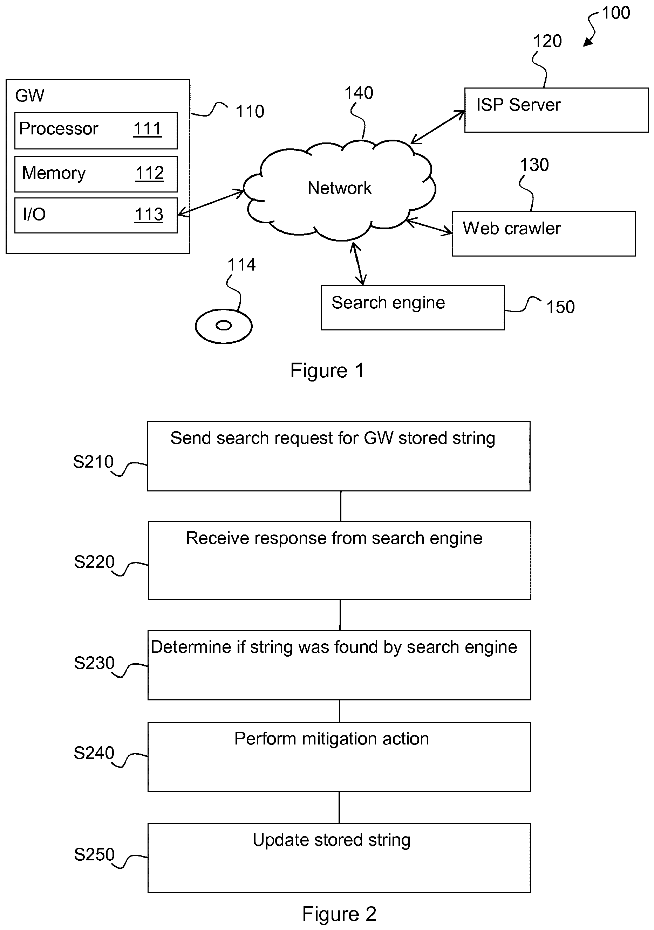

Figure 1 illustrates an exemplary system 100 implementing the present principles. The system 100 comprises a gateway (GW) 110 and an ISP server 120 operably connected through a network 140, such as for example the Internet. Figure 1 also illustrates a conventional Web crawler device 130 configured to search the Internet for devices such as the GW 110.

The GW 110 includes at least one hardware processing unit ("processor") 111 configured to run a local HTTP server with an administration page and to execute instructions of a software program to determine if the GW is open to the network 140, as further described herein. The GW 110 further includes memory 112 configured to store at least one of the software program, a string of information to include on the administration page, and at least one identifier of an Internet search engine 150, such as Google, Yahoo and Bing. The GW further includes at least one communication interface ("I/O") 113 configured to interact with other devices over the network 140.

The processor 111 is further configured to run a firewall that can be at least partly opened to allow remote connections for, for example, troubleshooting, i.e. access to the administration page is controlled. As already mentioned, opening the firewall can enable access to the GW and thus leave the GW exposed to uncontrolled access from devices on the Internet, which in turn can enable web crawlers access to the administration page or another page such as for example "index.htm", i.e. the "welcome page" of the HTTP server.

It will thus be understood that information on the administration page or any other (HyperText Mark-Up Language) HTML page at least in certain cases can be accessed by web crawlers and that the information then can be indexed and found using a corresponding web search engine 150.

Non-transitory storage media 114 stores a software program with instructions that, when executed by at least one hardware processor, performs the functions of the GWs 110 as further described herein, and possibly the string of information.

The skilled person will appreciate that the illustrated GW is very simplified for reasons of clarity and that features such as internal connections and power supplies have been omitted for reasons of clarity.

Now, as mentioned, a page such as "index.htm" that is liable to web crawling, includes a string of information intended to be retrieved and indexed by web crawlers when the page is exposed to the Internet.

In one embodiment of the present principles, the string of information is a "identification string" unique to the GW 110 in a set of GWs by the same manufacturer or service provider. As can be seen, the identification string is thus an identifier of the GW. The identification string could for example be a number, possibly together with an identifier of the service operator or the manufacturer. It is preferred that the identification string is statistically unique on the Internet.

One way of obtaining such an identification string is to hash the MAC address of the device, preferably together with some other information to distinguish the resulting hash value from other hashes of the same MAC address. For example, the GW may hash its MAC address appended to a present time, which enables generation of different identification strings at different times. It will be appreciated that the resulting hash value is statistically unique since collisions are possible, but statistically very unlikely. Further, the location of the GW, for example determined using GPS or similar technology, or a precise time at the GW can be used to determine the identification string, although these possibilities are liable to collisions as it may happen that two GWs use the same values.

Another way of obtaining such an identification string is to select a set of preferably rare words - in particular adjectives and nouns - to make an expression that is statistically unique. An example of such an expression is "blue-speckled vermillion storey pole". An advantage of such an identification string is that it can "make sense" and thus pass web crawler filters that may reject items such as big numbers and meaningless strings. It is noted that the words are not necessarily contiguous on the page.

The processor 111 is further configured to send a search request to a search engine 150 whose identifier is stored in the memory 112. The search request includes at least part of the identification string. Then, upon reception of the response, the processor 111 is able to check whether or not the identification string has been found by the web crawler. In case the identification string has not been found, the processor 111 can send the search request to a further search engine 150 and so on until the list of identifiers has been exhausted.

In case the identification string has been found, then the processor 111 is configured to take mitigating action in order to close the firewall of the GW, i.e. to disable access to, among other things the page with the identification string. Examples of such action are to attempt to close the firewall (but as this was not already done, something may hinder this), change a password for accessing the page, send or display a message intended for the user, and send a message to the ISP server 120 of the service operator.

After performing the action, the processor preferably updates the identification string of information to make it possible to detect further exposure to the Internet. If the identification string is a hash of the MAC address and other information it is sufficient to increment a counter to be included in the information. In case the identification string is an expression of words, it is preferable to renew the expression, which can be done by the processor 111 provided it has access to a list of possible words to use, but the processor 111 can also request a new expression from the IPS server 120.

The embodiment has been described with the GW 110 as the querying device. It is also possible for the ISP server 120 to send the queries to the search engine 150 and then take suitable mitigating action, attempting to close the firewall of the GW 110 in case the identification string is returned in response to a search request.

In an alternative embodiment, the detection of exposed GWs is preferably performed by the ISP provider. In the alternative embodiment, the string of information, "detection string", is shared between a number of GWs. The number M of GWs that can share the detection string is equal to the total number of GWs divided by the number R of answers provided by a search engine 150 that is used for the requests.

For example, in case there are 1000000 GWs and the search engine returns 100 answers, it is sufficient to send 1000 search requests to cover all the GWs.

Further, if the probability of a GW being exposed is estimated as p, then the optimal group size is M/pR.

In the alternative embodiment, the detection string can be a first, preferably unique identifier for the entire group of GWs and a second identifier shared by the GWs of a sub-group. It is noted that the identifiers are not necessarily contiguous on the page. The page can also include a statistically unique identifier, an identification string, for each GW as in the previous embodiment.

Then the ISP server 120 sends search requests to the search engine 150 and analyses the responses. In case of a hit, the ISP server 120 can further analyse the relevant response in search of, for example, an IP address of the device from which the information was crawled or the identification string.

The ISP server 120 can then take suitable mitigating action, attempting to close the firewall of the GW 110 - in case the detection string is returned in response to a search request.

While this embodiment is preferred when the ISP server 120 sends the search requests, it is also possible for the processor 111 of the GW 110 to do so.

The skilled person will appreciate that it in either embodiment is preferred that the search request is sent repeatedly, possibly regularly such as for example once a week.

Figure 2 illustrates a method for determining if a gateway is vulnerable according to an embodiment of the present principles.

In step S210, the processor 111 sends, via the communication interface 113, to a search engine 150 a search request for at least part of the identification string included in one of its web server's web pages (such as "index.htm").

In step S220, the processor 111 receives, via the communication interface 113, a search response from the search engine 150.

In step S230, the processor 111 determines whether the identification string is included in the search response. As already noted, the identification string is not necessarily contiguous on the web page, in which case the determination should take this into account.

In case the identification string was included in the search response, and it thus can be assumed that the GW is (or at least was) exposed to the network 140, in step S240, the processor 111 can perform an action intended to shut the firewall and end the exposure to the Internet, i.e. end uncontrolled access from the Internet. Examples of actions include:
- changing of a password of the firewall or the cryptographic keys required to access the firewall, i.e. changing the password or keys needed to access the page with the detection string or the idenfication string;
- closing a firewall of the GW against all IP addresses;
- rendering an alert message on a user interface (not shown) of the GW;
- sending an alert message to the ISP via the interface 113; and
- sending an alert message to a user via the interface 113, for instance by mail or as a popup on a service enjoyed by the user.

Finally, in step S250, the processor 111 updates the identification string on its web page in order to enable detection of further exposure to the Internet.

In a variant, the processor 111 is configured to renew the identification string on from time to time, for example regularly such as every month. It is preferred that the identification string comprises two parts: a first part that is statistically unique to the GW and a second part that is at least statistically unique to the version of the identification string (such as a version number that is incremented for each version). This can permit an at least approximate estimate of when the web crawler accessed the page with the identification string.

To enable this, the processor 111 stores past identification strings or at least the seconds part of the identification string and their time of use (e.g. May 2017) in the memory 112. In the variant, the search request comprises at least the first part. In case the first part is found, the returned information is analysed to determine the second part therein. A comparison between the returned second part and the data stored in the memory 112 then reveals the time when the web crawler accessed the page with the identification string.

The processor 111 can also be configured to change the password or cryptographic keys required for accessing the page with the identification string from the Internet 140 when the identification string is changed. If a search request returns an identification string that is not the current identification string, the processor 111 can opt to do nothing since the password or the cryptographic keys have already been changed and action thus a priori already has been taken to protect access to the page with the identification string.

The skilled person will appreciate that it can be assumed that if no "major" web crawler, or more generally if no known web crawler, manages to get a webpage from a GW, it is likely that this means that the GW is not open to any device from the network. At the same time, if the GW is exposed to the Internet, then it is likely that a major web crawler will find it before sites with less resources, such as for example Shodan.

It will thus be appreciated that the present principles can provide a solution for determining if a GW is open to a network.

While the present principles have been described with reference to gateways, the skilled person will understand that these principles readily extend to other network devices that normally should be closed to connections from the Internet. Examples of such a device are cable modems and Network-Attached Storage (NAS) devices.

The present principles also extend to devices without a direct access to the Internet, such as devices in a LAN connected, directly or indirectly to a gateway.

In addition, HTTP has been used as a non-limitative example that can readily be extended to other suitable communication protocols such as HTTPS.

It will also be appreciated that the present principles can be implemented in a local network with at least one device whose information normally should be available only to that device, provided that this network provides a web crawler functionality to index information found in the network.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (110) comprising:
a communication interface (113) configured for connection to a network (140);
memory (112) configured to store an identifier for the device or a group of devices including the device; and
at least one processor (111) configured to:
enable controlled access to the identifier from the network (140) via the communication interface (113);
send a search request for at least part of the identifier to a search engine (150);
receive a search response from the search engine (150);
determine from the search response whether the identifier was found by the search engine (150); and
in case the identifier was found by the search engine (150), perform an action intended to result in disabling uncontrolled access to the identifier from the network (140) via the communication interface (113).

2. The device of claim 1, wherein the network is the Internet and the at least one processor (111) is further configured to run a HTTP server with at least one page including the identifier.

3. The device of claim 2, wherein the page is the index.htm page.

4. The device of claim 1, wherein the identifier is a statistically unique identifier.

5. The device of claim 4, wherein the statistically unique identifier is for the device and comprises a hash value based on information specific to the device.

6. The device of claim 5, wherein the information specific to the device comprises a MAC address of the device.

7. The device of claim 4, wherein the statistically unique identifier comprises a set of words chosen to be statistically unique.

8. The device of claim 4, wherein the at least one processor (111) is further configured to update the statistically unique identifier, in case the statistically unique identifier was found in the search response.

9. The device of claim 1, wherein the action is at least one of: changing a password or at least one cryptographic key required for accessing the identifier, sending an alert message, rendering an alert message on a user interface of the device, and closing a firewall of the device.

10. The device of claim 9, wherein the action is changing a password or at least one cryptographic key required for accessing the identifier, wherein the at least one processor (111) is further configured to renew the identifier repeatedly, store each identifier and its time period of use in the memory (112), and perform the action only in case the password or the at least one cryptographic key has not been changed after lapse of the time period of use of the identifier received in the search response.

11. A method for determining if a device (110) is open to a network (140), the method comprising, at the device (110) storing an identifier for the device or a group of devices including the device:
sending (S210) by at least one processor (111) a search request comprising the identifier to a search engine (150);
receiving (S220), by the at least one processor (111), a response to the search request from the search engine (150);
determining (S230), by the at least one processor (111), from the search response whether the identifier was found by the search engine (150); and
in case the identifier was found by the search engine (150), performing (S240), by the at least one processor (111), an action intended to disable uncontrolled access to the identifier from the network (140) via the communication interface (113).

12. The method of claim 11, wherein the identifier is a statistically unique identifier and the method further comprises updating, by the at least one processor (111), the statistically unique identifier in case the statistically unique identifier was found in the search response.

13. The method of claim 11, wherein the action is at least one of: changing a password or at least one cryptographic key required for accessing the identifier, sending an alert message, rendering an alert message on a user interface of the device,and closing a firewall of the device.

14. Computer program comprising program code instructions executable by a processor for implementing a method according to any one of claims 11-13.

15. Computer program product that is stored on a non-transitory computer readable medium (101) and comprises program code instructions executable by a processor for implementing a method according to any one of claims 11-13.
